# EUROPÄISCHE PATENTSCHRIFT

(11) **EP 0 815 151 B1**
(45) Veröffentlichungstag und Bekanntmachung des Hinweises auf die Patenterteilung: **20.09.2000**
(21) Anmeldenummer: 96907417.8
(22) Anmeldetag: 09.03.1996
(51) Int. Cl.: C08G 12/34

(54) **MODIFIZIERTE MELAMINHARZE UND DEREN VERWENDUNG ZUR HERSTELLUNG VON POST-FORMING-LAMINATEN**
MODIFIED MELAMINE RESINS AND THEIR USE IN THE MANUFACTURE OF POST-FORMING LAMINATES
RESINES DE MELAMINE MODIFIEES ET LEUR UTILISATION DANS LA FABRICATION D'AGGLOMERES POSTFORMABLES

(30) Priorität: 24.03.1995 AT 52395
(43) Veröffentlichungstag der Anmeldung: 07.01.1998
(73) Patentinhaber: Agrolinz Melamin GmbH, A-4021 Linz (AT)
(72) Erfinder: PIEH, Stefan, A-4060 Leonding (AT); HEGER, Friedl, A-4040 Linz (AT); CONTI, Natale, I-21030 Varese (IT); CAMAIONI, Domenico, I-21052 Busto Arsizio (IT)
(74) Vertreter: Kunz, Ekkehard, Dr.
(86) Internationale Anmeldenummer: EP9601024
(87) Internationale Veröffentlichungsnummer: WO9630422

(56) Entgegenhaltungen:
- US-A- 3 859 243
- DATABASE WPI Section Ch, Week 7817 Derwent Publications Ltd., London, GB; Class A21, AN 78-31344A XP002005698 & JP,A,53 029 357 (MATSUSHITA ELEC WORKS) , 18.März 1978

## Beschreibung

Melaminharz-Laminate auf Basis von imprägnierten Papieren finden aufgrund ihrer guten Lichtechtheit, Abriebfestigkeit, Chemikalienbeständigkeit, Glutbeständigkeit und Oberflächenhärte ein großes Einsatzgebiet als Dekor- und Schutzoberflächen.

Derartige Schichtpreßstoffe, die durch Imprägnieren von Trägerbahnen aus Textilien, Papier oder Glasvliesen mit wäßrigen Lösungen von Melamin-Formaldehyd-Vorkondensaten und anschließendes Trocknen und Aushärten bei Temperaturen von über 100°C erhalten werden, sind beispielsweise in EP-A-0 077 067 beschrieben. In der EP-B1-0 268 809 sind Melaminharzfolien beschrieben, die durch Beschichten von Papieren mit einer mindestens 70 Gew.%igen wäßrigen Lösung eines methylveretherten Melaminharzes erhalten werden.
Der Nachteil dieser bekannten Melaminharze und Melaminharz-Laminate liegt insbesondere darin, daß sie beim Aushärten eine relativ große Schwindung aufweisen, daß ihre mechanischen Eigenschaften, wie beispielsweise Kochwasserresistenz, in vielen Fällen nicht ausreichend sind, und daß sie vor allem sehr spröde sind und keine post-forming-Eigenschaften aufweisen.

Aus US 4,424,261 ist bekannt, daß die Verwendung von Hydroxyalkylmelaminen als Modifizierungsmittel für Melamin-Formaldehydharze zu einer Verbesserung der post-forming-Eigenschaften führt. Der Nachteil dieser Modifizierungsmittel ist jedoch deren Instabilität, wodurch sie nicht leicht verfügbar und weiters nur schwer handhabbar sind, da sie stark zur Vernetzung mit sich selbst neigen.
Andere Modifizierungsmittel, wie beispielsweise Guanamine, die zu post-forming-Eigenschaften der Harze führen, sind in EP-A1-0 561 432 beschrieben. Guanamine, besonders solche mit aromatischen Kernen wie Benzoguanamin, weisen jedoch keine ausreichende Resistenz gegen Licht auf, wodurch die modifizierten Harze leicht vergilben. Weiters wirkt sich die geringe Löslichkeit der Guanamine im Reaktionsmedium nachteilig auf den Herstellprozeß der Harze aus.

US 3,859,243 beschreibt weiters Melamin-Formaldehydharze, die 2-(2-Aminoethoxy)ethanol als Modifizierungsmittel enthalten. Die Möglichkeit diese Harze durch Sprühtrocknung in Pulverform zu überführen ist nicht beschrieben.

Es war somit notwendig ein Modifizierungsmittel für Melaminharze zu finden, das die Nachteile der bisher bekannten Modifizierungsmittel nicht aufweist, die post-forming-Eigenschaften der Melaminharze ohne ihre Kochwasserresistenz zu reduzieren stark verbessert und die Überführung der Harze in Pulverform durch Sprühtrocknung ermöglicht.
Unerwarteterweise wurde nun gefunden, daß derartige Melaminharze durch Verwendung spezieller Amine als Modifizierungsmittel erhalten werden.

Gegenstand der vorliegenden Erfindung sind demnach modifizierte Melamin-Formaldehydharze, die dadurch gekennzeichnet sind, daß sie aus einem Kondensat aus Formaldehyd, Melamin und einem Modifizierungsmittel, enthaltend Isophorondiamin und/oder Amine der Formel

NR₃R₄ - R₂ - Y - R₁ - X I

in der X Wasserstoff oder NR₃R₄ und Y -0- oder -NH- sein kann und R₁ einen linearen oder verzweigten C₁ bis C₆-Alkyl- oder Alkylenrest, R₂ einen linearen oder verzweigten C₁ bis C₆-Alkylenrest bedeuten und R₃ und R₄ gleich oder verschieden sein können und H oder einen linearen oder verzweigten C₁ bis C₆-Alkylrest bedeuten bestehen, wobei das molare Verhältnis von Formaldehyd zu Melamin 1,2 bis 2,5 beträgt und daß sie durch Sprühtrocknung in Pulverform überführbar sind.

Die erfindungsgemäßen Melaminharze sind somit durch Isophorondiamin und/oder Amine der Formel I modifiziert.

In der Formel I bedeutet R₁ einen C₁ bis C₆-Alkyl- oder Alkylenrest, der linear oder verzweigt sein kann. Beispiele dafür sind Methyl, Ethyl, n-Propyl, i-Propyl, n-Butyl, sek.-Butyl, tert.-Butyl, Hexyl; Methylen, Ethylen, n-Propylen, i-Propylen, n-Butylen, sek.-Butylen, tert.-Butylen oder Hexylen.
R₂ bedeutet in der Formel I einen wie oben definierten linearen oder verzweigten C₁-C₆-Alkylenrest. R₃ und R₄ können gleich oder verschieden sein und H oder einen wie oben definierten linearen oder verzweigten C₁ bis C₆-Alkylrest bedeuten. Bevorzugt bedeuten R₃ und R₄ Wasserstoff.

X kann Wasserstoff oder ein Aminrest sein. Unter Aminrest sind dabei sowohl primäre, sekundäre als auch tertiäre Aminreste der Formel - NR₃R₄ zu verstehen, wobei R₃ und R₄ wie oben definiert sind.
Y bedeutet -0- oder -NH-.

Beispiele für Amine der Formel I sind Methoxypropylamin, Ethoxypropylamin. Bevorzugt sind Amine wie etwa Ethoxypropylamin oder Isophorondiamin.

Isophorondiamin und die Amine der Formel I können sowohl als Einzelverbindung als auch als Gemisch mehrerer Amine verwendet werden. Die Menge an Amin im erfindungsgemäßen Melamin-Formaldehydharz beträgt etwa 1,5 bis 20 Gew.%, bezogen auf Melamin. Bevorzugt werden etwa 2,5 bis 15 Gew.% an Amin eingesetzt.
Den Aminen der Formel I bzw. Isophorondiamin können gegebenenfalls zusätzliche übliche Modifizierungsmittel wie etwa Dicyandiamid, Caprolactam, ein- oder mehrwertige Alkohole wie Trimethylolpropan zugemischt werden. Die Menge an zusätzlichem Modifizierungsmittel liegt dabei zwischen 0 und 40 Gew.% bezogen auf Melamin, bevorzugt zwischen 0 und 20 Gew.%.

Das Molverhältnis von Formaldehyd zu Melamin liegt bei den zu modifizierenden Harzen bei 1,2 : 1 bis 2,5 : 1. Bevorzugt werden Formaldehyd und Melamin in einem Molverhältnis von 1,4 bis 2,0 : 1 eingesetzt.

Die erfindungsgemäß modifizierten Melamin-Formaldehydharze werden erhalten, indem man Melamin mit Formaldehyd in bekannter Weise in wässriger Lösung kondensiert und das Modifizierungsmittel vor oder während der Kondensation in der oben genannten Menge zumischt. Die Amine werden dabei direkt dem zu modifizierenden Melamin-Formaldehydharz zugegeben. Es kann jedoch auch in einer Vorstufe ein hochmodifiziertes Melamin-Formaldehydharze durch Zugabe von 40 bis 60 Gew.% an Amin, bezogen auf Melamin, hergestellt werden. Dieses hochmodifizierte Melamin-Formaldehydharze kann dann als Modifizierungsmittel zur Herstellung der erfindungsgemäßen Melamin-Formaldehydharz (MF-Harz) eingesetzt werden. Das Gewichtsverhältnis von Modifizierungsmittel zu MF-Harz beträgt dabei 1 : 2 bis 1 : 4, bevorzugt 1 : 3.

Zur Beschleunigung der Reaktion bei der Modifikation der Melaminharze mit der erfindungsgemäßen Kombination können übliche Katalysatoren, wie z. B. p-Toluolsulfonsäure, in Mengen von etwa 0,1 bis 1 Gew.%, bezogen auf die Gesamtmenge des Melaminharzes, zugesetzt werden.

Den Harzen können weiters auch hydrolysierbare Salze schwacher bis starker Carbonsäuren, Sulfonsäuren oder Mineralsäuren, beispielsweise Diethanolaminacetat, Morpholin, Diethanolamin, Ethanolaminhydrochlorid, Ethylendiaminacetat, Ammoniumrhodanid, Ammoniumlactat, Ethylendiaminphosphat oder das Dimethylethanolaminsalz der p-Toluolsulfonsäure zugefügt werden, um die Härtung zu beschleunigen, ohne daß sich dadurch die Elastizität der Harze verschlechtert.

Die Kondensation der Harze wird in der Regel bis zu einer begrenzten Wasserverdünnbarkeit fortgeführt. Die so hergestellten Harze, sowie die als Modifikationsmittel verwendeten hochmodifizierten Harze können gewünschtenfalls durch Sprühtrocknung in Pulverform überführt werden. Bevorzugt werden die Harze dabei auf eine Restfeuchte von 1 - 1,5 % beispielsweise mittels eines Zentrifugal- oder eines Lufttrockners, getrocknet. Die so getrockneten Harze müssen dann vor ihrer Verwendung in Wasser gelöst werden.
Die erfindungsgemäß modifizierten Melamin-Formaldehydharze eignen sich besonders zur Herstellung von Dekor- oder Schutzoberflächen mit ausgezeichneten post-forming-Eigenschaften. Die Herstellung der Vorprodukte (Filme) der Dekor- oder Schutzoberflächen erfolgt durch Imprägnieren von Papier- oder Gewebebahnen. Papierbahnen sind bevorzugt aus Dekorpapier oder Kraftpapier. Gewebebahnen bestehen dabei bevorzugt aus einem Vlies, Gewebe oder Gelege aus Glas-, Kohle-, Keramik- oder Aramidfasern. Entsprechend den Anforderungen an die Eigenschaften der so hergestellten Laminate, können auch Gemische verschiedener Fasern, unidirektionale Endlosfasern oder mehrere Lagen gleicher oder verschiedener Verstärkungsbahnen eingesetzt werden.

Die Imprägnierung dieser Bahnen mit den erfindungsgemäß modifizierten Melamin-Formaldehydharzen erfolgt beispielsweise durch Tauchen oder Sprühen und anschließendem Abquetschen oder Rakeln bis zum gewünschten Harzgehalt der Filme. Der Harzgehalt ist vor allem von den geforderten Eigenschaften der Filme bzw. der Laminate sowie von der Art der Faserverstärkung abhängig und liegt üblicherweise bei 30 bis 60 Gew.%, bezogen auf das mit Harz imprägnierte Trägermaterial.

Entsprechend der Viskosität und Konsistenz des Melaminharzes erfolgt die Imprägnierung üblicherweise bei Temperaturen von etwa 20 bis 60°C. Um lagerfähige Filme zu erhalten, werden die Papiere im Anschluß an die Imprägnierung bei etwa 80 bis 160°C auf einen bestimmten Restfeuchtegehalt getrocknet, wobei das leichtfließende Imprägnierharz je nach Temperatur und Länge der thermischen Behandlung mehr oder weniger unter teilweiser Aushärtung und Vernetzung reagiert.
In diesem Zustand ist der Film bei etwa Raumtemperatur lager- und transportfähig. Mehrere Lagen von imprägnierten Kraft- und Dekorpapieren werden dann bei einer Temperatur von120 bis 180°C und unter einem Druck von 25 bis 100 bar zum Laminat verpreßt. Aufgrund der ausgezeichneten post-forming-Eigenschaften kann das Laminat unter weiterer Vernetzung des Melaminharzes bei Temperaturen von 80 bis 180°C unter Druck zum gewünschten Formteil verformt werden.

Die aus den erfindungsgemäß modifizierten Harzen erhaltenen Laminate zeichnen sich vor allem durch eine hohe Kochwasserresistenz, sowie durch eine verbesserte Elastizität ihrer Oberfläche aus, sodaß geringe Biegeradien unter Vermeidung von Rißbildung erreicht werden können.

### Beispiel 1:

In einem Behälter mit Rührer und Rückflußkühler wurden 126 Teile (1mol) Melamin, 137,5 Teile (1,65 mol) an 36 %iger Formaldehydlösung, 4,6 Teile (0,027 mol) Isophorondiamin und 42,4 Teile entionisiertem Wasser bei 90°C und einem pH-Wert von 9,5 - 10 (aufrechterhalten durch Natriumhydroxyd) kondensiert bis eine Wasserverdünnbarkeit von etwa 0,2 (bei 20°C), (Volumenteile H₂O : Volumenteile Harz) erreicht war.

### Beispiel 2:

Analog Beispiel 1 wurden weitere modifizierte Melaminharze hergestellt. Der Anteil an Melamin betrug jeweils 126 Teile (1 mol), der Anteil an 36 %igem Formaldehyd (FA) betrug 141,7 T (1,7 Mol) und an entionisiertem Wasser (H₂O) 44,4 T, als Modifizierungsmittel wurden 9,6 T (0,093 mol) Ethoxypropylamin verwendet, die erreichte Wasserverdünnbarkeit (WD) betrug 1,2.

### Beispiel 3:

Die Harze aus Beispiel 1 und 2 wurden mit 0,2 Gew.% Härter EC15 (Chemie Linz Castellanza) auf einen Trübungspunkt bei 100°C von 20 Minuten eingestellt. Anschließend wurde Dekorpapier, sowie Kraftpapier, das als Kernpapier fungierte, imprägniert. Das Dekorpapier (95 g/m²) enthielt 55 Gew.% Harzanteil und 6 Gew.% flüchtige Bestandteile (bezogen auf das imprägnierte Papier), das Kernpapier (80 g/m²) enthielt 47 Gew.% Harzanteil und ebenfalls 6 Gew.% flüchtige Bestandteile (bezogen auf das imprägnierte Papier)
Eine Schicht imprägniertes Dekorpapier und 3 Lagen Kernpapier wurden sodann mit einem Druck von 30 bar bei 175°C für 20 Sekunden zusammengepreßt. Die so erhaltenen Laminate wurden auf ihre Nachverformbarkeit und ihre Kochwasserresistenz untersucht. Die Ergebnisse sind aus Tabelle 1 ersichtlich.

**Tabelle 1**

| | Nachverformbarkeit Durchmesser in mm(*) | Kochwasserresistenz | |
|---|---|---|---|
| | | Blasenbildung nach 2 und 6 h | Wasserabsorption % EN 438-2 |
| Beispiel 1 | 4 | wenige kleine Blasen | 12,3 |
| Beispiel 2 | 3 | keine Blasen | 9,5 |

| | | | |
|---|---|---|---|
| (*) kleinster Durchmesser um den Laminat, aufgeheizt auf 160°C, um 90° gebogen werden kann, ohne zu reißen. | | | |

## Patentansprüche

1. Modifizierte Melamin-Formaldehydharze, dadurch gekennzeichnet, daß sie aus einem Kondensat aus Formaldehyd, Melamin und einem Modifizierungsmittel, enthaltend Isophorondiamin und/oder Amine der Formel
NR₃R4 - R₂ - Y - R₁ - X I
in der X Wasserstoff oder NR₃R₄ und Y -0- oder -NH- sein kann und R₁ einen linearen oder verzweigten C₁ bis C₆-Alkyl- oder Alkylenrest, R₂ einen linearen oder verzweigten C₁ bis C₆-Alkylenrest bedeuten und R₃ und R₄ gleich oder verschieden sein können und H oder einen linearen oder verzweigten C₁ bis C₆-Alkylrest bedeuten bestehen, wobei das molare Verhältnis von Formaldehyd zu Melamin 1,2 bis 2,5 beträgt und daß sie durch Sprühtrocknung in Pulverform überführbar sind.

2. Modifizierte Melamin-Formaldehydharze nach Anspruch 1, dadurch gekennzeichnet, daß das Kondensat Modifizierungsmittel in einer Menge von 1,5 bis 20 Gew.% bezogen auf Melamin, enthält.

3. Modifizierte Melamin-Formaldehydharze nach Anspruch 1, dadurch gekennzeichnet, daß das Kondensat zusätzliche Modifizierungsmittel in einer Menge von 0 bis 40 Gew.%, bezogen auf Melamin, enthält.

4. Modifizierte Melamin-Formaldehydharze nach Anspruch 3, dadurch gekennzeichnet, daß als zusätzliche Modifizierungsmittel Dicyandiamid, Caprolactam oder ein- oder mehrwertige Alkohole verwendet werden.

5. Modifizierte Melamin-Formaldehydharze nach Anspruch 1, dadurch gekennzeichnet, daß sie Formaldehyd und Melamin in einem molaren Verhältnis von 1,4 : 1 bis 2 : 1 enthalten.

6. Melaminharz-Laminate, dadurch gekennzeichnet, daß sie aus mit modifizierten Melaminharzen gemäß Anspruch 1 imprägnierten Papier- oder Gewebebahnen bestehen.

7. Verfahren zur Herstellung von Melaminharz-Laminaten, dadurch gekennzeichnet, daß eine Papier- oder Gewebebahn mit einem modifizierten Melaminharz imprägniert wird, das aus einem Kondensat aus Formaldehyd, Melamin und einem Modifizierungsmittel, enthaltend Isophorondiamin und/oder Amine der Formel
NR₃R₄ - R₂ - Y - R₁ - X I
in der X Wasserstoff oder NR₃R₄ und Y -0- oder -NH- sein kann und R₁ einen linearen oder verzweigten C₁ bis C₆-Alkyl- oder Alkylenrest, R₂ einen linearen oder verzweigten C₁ bis C₆-Alkylenrest bedeuten, und R₃ und R₄ gleich oder verschieden sein können und H oder einen linearen oder verzweigten C₁ bis C₆-Alkylrest bedeuten bestehen, wobei das molare Verhältnis von Formaldehyd zu Melamin 1,2 bis 2,5 beträgt.

## Claims

1. Modified melamine/formaldehyde resins, which comprise a condensate of formaldehyde, melamine and a modifier, containing isophoronediamine and/or amines of the formula
NR₃R₄-R₂-Y-R₁-X I
in which X may be hydrogen or NR₃R₄ and Y may be -O- or -NH- and R₁ denotes a linear or branched C₁- to C₆-alkyl or alkylene radical, R₂ denotes a linear or branched C₁-to C₆-alkylene radical and R₃ and R₄ may be identical or different and denote H or a linear or branched C₁- to C₆-alkyl radical, the molar ratio of formaldehyde to melamine being from 1.2 to 2.5, and which can be converted into powder form by spray-drying.

2. Modified melamine/formaldehyde resins according to Claim 1, characterized in that the condensate contains modifier in an amount of from 1.5 to 20% by weight, based on melamine.

3. Modified melamine/formaldehyde resins according to Claim 1, characterized in that the condensate contains additional modifiers in an amount of from 0 to 40% by weight, based on melamine.

4. Modified melamine/formaldehyde resins according to Claim 3, characterized in that dicyanodiamide, caprolactam or monohydric or polyhydric alcohols are used as additional modifiers.

5. Modified melamine/formaldehyde resins according to Claim 1, which contain formaldehyde and melamine in a molar ratio of from 1.4 : 1 to 2 : 1.

6. Melamine resin laminates, which comprise paper or fabric webs impregnated with modified melamine resins according to Claim 1.

7. Process for the production of melamine resin laminates, characterized in that a paper or fabric web is impregnated with a modified melamine resin which comprises a condensate of formaldehyde, melamine and a modifier, containing isophoronediamine and/or amines of the formula
NR₃R₄-R₂-Y-R₁-X I
in which X may be hydrogen or NR₃R₄ and Y may be -O- or -NH- and R₁ denotes a linear or branched C₁- to C₆-alkyl or alkylene radical, R₂ denotes a linear or branched C₁-to C₆-alkylene radical, and R₃ and R₄ may be identical or different and denote H or a linear or branched C₁- to C₆-alkyl radical, the molar ratio of formaldehyde to melamine being from 1.2 to 2.5.

## Revendications

1. Résines de mélamine/formaldéhyde modifiées, caractérisées en ce qu'elles sont composées d'un produit de condensation du formaldéhyde, de la mélamine et d'un agent modificateur, renfermant de l'isophoronediamine et/ou des amines de formule
NR₃R₄-R₂-Y-R₁-X I
dans laquelle X représente un hydrogène ou NR₃R₄ et Y peut être -O- ou -NH-, et R₁ représente un radical alkyle ou alkylène en C₁ à C₆ linéaire ou ramifié, R₂ représente un radical alkylène en C₁ à C₆ linéaire ou ramifié, et R₃ et R₄ peuvent être identiques ou différents et représentent H ou un radical alkyle en C₁ à C₆ linéaire ou ramifié, le rapport molaire entre formaldéhyde et mélamine étant de 1,2 à 2,5, et en ce qu'elles peuvent être mises sous forme pulvérulente par séchage par pulvérisation.

2. Résines de mélamine/formaldéhyde modifiées selon la revendication 1, caractérisées en ce que le produit de condensation contient des agents modificateurs en une quantité de 1,5 à 20% en poids, par rapport à la mélamine.

3. Résines de mélamine/formaldéhyde modifiées selon la revendication 1, caractérisées en ce que le produit de condensation contient des agents modificateurs supplémentaires en une quantité de 0 à 40% en poids, par rapport à la mélamine.

4. Résines de mélamine/formaldéhyde modifiées selon la revendication 3, caractérisées en ce que l'on utilise le dicyanodiamide, le caprolactame ou un alcool monohydrique ou polyhydrique en tant qu'agents modificateurs supplémentaires.

5. Résines de mélamine/formaldéhyde modifiées selon la revendication 1, caractérisées en ce qu'elles renferment du formaldéhyde et de la mélamine en un rapport molaire de 1,4:1 à 2:1.

6. Stratifiés de résines mélaminiques, caractérisés en ce qu'ils sont composés de bandes de papier ou de tissu imprégnées de résines mélaminiques modifiées selon la revendication 1.

7. Procédé de préparation de stratifiés de résine mélaminique, caractérisé en ce qu'une bande de papier ou de tissu est imprégnée d'une résine mélaminique modifiée qui est composée d'un produit de condensation du formaldéhyde, de la mélamine et d'un agent modificateur, renfermant de l'isophoronediamine et/ou des amines de formule
NR₃R₄-R₂-Y-R₁-X I
dans laquelle X représente un hydrogène ou NR₃R₄ et Y peut être -O- ou -NH-, et R₁ représente un radical alkyle ou alkylène en C₁ à C₆ linéaire ou ramifié, R₂ représente un radical alkylène en C₁ à C₆ linéaire ou ramifié, et R₃ et R₄ peuvent être identiques ou différents et représentent H ou un radical alkyle en C₁ à C₆ linéaire ou ramifié, le rapport molaire entre formaldéhyde et mélamine étant de 1,2 à 2,5.
